Europäisches Patentamt

European Patent Office

Office européen des brevets

(11) Publication number: **0 175 871**
**B1**

(12) **EUROPEAN PATENT SPECIFICATION**

(45) Date of publication of patent specification: **23.03.88**

(21) Application number: **85109031.6**

(22) Date of filing: **19.07.85**

(51) Int. Cl.⁴: **A 23 L 1/22,** A 23 L 1/227, A 23 L 1/222, A 23 L 1/235

(54) **Process for improving or modifying the taste and aroma of citrus fruit compositions.**

(30) Priority: **12.09.84 US 649572**

(43) Date of publication of application:
**02.04.86 Bulletin 86/14**

(45) Publication of the grant of the patent:
**23.03.88 Bulletin 88/12**

(84) Designated Contracting States:
**CH DE FR GB LI NL**

(56) References cited:
**US-A-4 479 974**

**PATENT ABSTRACTS OF JAPAN, vol. 7, no. 97 (C-163)1242r, 23 April 1983**

(73) Proprietor: **FIRMENICH SA**
**1, route des Jeunes**
**CH-1211 Genève 8 (CH)**

(72) Inventor: **Van Den Ouweland, Godefridus Antonius Maria**
**6, chemin de la Commanderie**
**CH-1228 Plan-Les-Ouates (CH)**

(74) Representative: **Salvadori, Giuseppe, Dr.**
**c/o Firmenich S.A. Case Postale 239**
**CH-1211 Genève 8 (CH)**

Courier Press, Leamington Spa, England.

## Description

There is disclosed a process to improve or modify the taste and aroma of citrus fruit flavor compositions of both natural and synthetic origin by conferring thereto a cooked optionally juicy, fleshy and peely, gustative character. The process consists in adding to the said compositions a product resulting from the process which consists in reacting at a temperature of between about 50 to 120°C an amino acid, or a mixture of amino acids selected from the group consisting of the following ones in their L-diastereo-isomeric form:

glycine
α-alanine
valine
serine
threonine
histidine
arginine
aspartic acid
glutamic acid
pyroglutamic acid
cysteine
methionine
proline and
citrulline

with a mixture consisting of

a. a carbohydrate selected from the group consisting of pentoses and hexoses,

b. ascorbic acid,

c. thiamine hydrochloride,

d. a concentrated citrus fruit juice or a citrus fruit oil, or alternatively a mixture of aldehydes derived from citrus fruits, and optionally water, during a time sufficient to develop a composition which upon dilution in water possessed the desired flavor note.

There is further disclosed a flavor composition resulting from the said process, as well as an edible material comprising the said composition as one of its flavor effective ingredients.

This invention relates to the field of flavors, more particularly, it provides a process to improve or modify the flavor character of citrus fruit flavor compositions, especially destined to concentrated orange juice or juice resulting from dissolving orange powder, a natural or artificial citrus fruit flavor composition dispersed on a solid edible support.

Experience has shown that many foods are susceptible to non-enzymic browning, especially orange powder or orange juice concentrates which undergo changes in odor and flavor during storage at room temperature or during the manufacturing process, for instance, through freeze-drying.

Strange as it may seem, consumers do not always regard such modifications as undesirable and tend to favor a juice having undergone such change in taste over freshly prepared natural ones. The consumer has thus acquired a certain degree of taste pattern recognition. This seems to be particularly the case for instance of the so-called "cooked note" that flavorists detect among the wide spectrum of flavor characters of certain citrus fruit juices.

It is an object of the present invention to provide a process which results in the improvement of citrus fruit flavor compositions, of both natural and synthetic origin, by conferring thereto a typical cooked note and a more juicy fleshy peely gustative character, thus providing an edible material that better satisfies the consumer's criteria of palatability.

Another object of the present invention is to provide a flavor composition destined to confer, enhance or improve the cooked not of citrus fruit juices or citrus fruit flavored foodstuffs and beverages which composition comprises having added thereto a product resulting from the above described process.

The process of this invention comprises reacting at a temperature of between about 50 and 120°C an amino acid, or a mixture of amino acids, with a mixture consisting of

a. a carbohydrate selected from the group consisting of pentoses and hexoses,

b. ascorbic acid,

c. thiamine hydrochloride,

d. A concentrated citrus fruit juice or a citrus fruit powder, or alternatively a mixture of synthetic or natural occurring aldehydes derived from citrus fruits, and optionally water, during a period of time sufficient to develop a composition which upon dilution in water possessed the desired flavor note.

Suitable amino acids include the following:

glycine
α-alanine
valine
serine
threonine

2

histidine
arginine
aspartic acid
glutamic acid
pyroglutamic acid
cysteine
methionine
proline and
citrulline

All the above mentioned amino acids are intended in their L-diastereomeric configuration.

Preferred individual amino acids are glycine, α-alanine, valine, serine, threonine, histidine, arginine, cysteine, methionine, proline and citrulline.

Preferred combinations in accordance with the invention of the said amino acids include the following:

A. glycine
   α-alanine
   valine
B. serine
   threonine
C. cysteine
   methionine
D. proline
   citrulline,
E. histidine
   arginine, and
F. glycine
   cysteine
   methionine.

Preferred hexoses and pentoses are for example glucose, mannose, galactose, fructose, ribose, arabinose and xylose.

Typical aldehyde mixtures comprise two or more of the following compounds:

| | |
|---|---|
| 2-heptyldec-2-enal | acetaldehyde |
| 2-octyldec-2-enal | butanal |
| undecanal | 2-ethylbutanal |
| 2-hexylundec-2-enal | pentanal |
| 2-octylundec-2-enal | trans-2-pentenal |
| dodecanal | hexanal |
| 2-dodecenal | trans-2-hexenal |
| 2-hexyldodec-2-enal | cis-2-hexenal |
| 2-heptyldodec-2-enal | hexenal |
| tetradecanal | heptanal |
| citronellal | octanal |
| geranial | 2-octenal |
| neral | octenal |
| citral | nonanal |
| α-senensal | decanal |
| β-sinensal | 2-decenal |
| benzaldehyde | trans-2-trans-4-decadienal |
| perillaldehyde | 2-hexyldec-2-enal |
| formaldehyde. | |

Of course, the proportions at which the different ingredients are employed in the afore-mentioned mixtures play an important role in achieving the most satisfactory composition, though these proportions can be determined by a trial-and-error approach.

The reaction time varies somehow in accordance with the temperature at which the process is effected and in accordance with the particular vessel into which it is carried out.

The invention process can be carried out by mixing the chosen ingredients under stirring and heating the obtained reaction mixture possibly at a constant preselected temperature until the desired flavor develops.

The obtained reaction mixture might be added in its isolated form, or in admixture with other flavoring ingredients, edible solvents and carriers to the base to be flavored. The methods for applying the flavoring composition are common in the art.

The examples which follow give a more precise indication of some of the preferred embodiments of the invention. The invention shall be illustrated by the said examples but it is not limited thereto.

The present invention is also based on the discovery derived in the course of experimentation that whenever mixtures of amino acids containing glycine, cysteine and methionine were subjected to the

3

above described process, in combination with the cited coingredients, the resulting product showed a fleshy, juicy and peely gustative character.

The presence of thiamine hydrochloride is in this case optional.

In order to achieve the desired results, a typical reaction mixture base consists of

D(+)-glucose monohydrate

ascorbic acid

a deterpenated natural citrus essential oil

and a mixture of the following amino acids:

glycine

serine

threonine

aspartic acid

glutamic acid

proline

cysteine, and

methionine.

Typically, the restulting mixture was heated at 90°C for 3 hours. The product thus obtained, when tasted at a level of 2°/oo in water (see the described evaluation method) in the following examples, presented a more developed cooked character with a fleshy, juicy and peely undertone than the base.

Examples

1. Separate flavor bases each consisting of a mixture of 5 g of D(+)-glucose monohydrate

0.1 g of ascorbic acid

0.1 g of thiamine hydrochloride

0.1 g of TETRAROME®([1]) orange, and

1 g of water

were admixed with the amino acid combinations A to G listed in Table I, and were reacted for 4 hours at 90°C.

_____

([1]) origin: FIRMENICH SA, a partially deterpenated natural orange essential oil

# 0 175 871

TABLE 1

| Exp. | L-amino acid | Amount (mg) | Presence of cooked note | |
|---|---|---|---|---|
| | | | Combination of amino acids | Individual amino acids |
| A | Glycine | 83 | +++ | + |
| | α-Alanine | 51 | | +++ |
| | Valine | 31 | | ++ |
| | Leucine | 22 | | 0 |
| | Isoleucine | 23 | | 0 |
| B | Serine | 23 | +++ | ++ |
| | Threonine | 12 | | +++ |
| C | Lysine | 43 | ++ | 0 |
| | Histidine | 12 | | ++ |
| | Arginine | 52 | | ++ |
| D | Phenylalanine | 30 | 0 | 0 |
| | Tyrosine | 17 | | 0 |
| E | Aspartic acid | 114 | 0 | 0 |
| | Glutamic acid | 99 | | 0 |
| F | Cysteine | 1 | + | + |
| | Methionine | 1 | | + |
| G | Proline | 45 | + | + |
| | Citrulline | 10 | | + |

0  no effect                    ++  good effect
+  moderate effect              +++  very good effect

The mixtures so obtained, to which there were added 20 mg of citric acid and 12 g of a sugar solution (65% dry product) per 100 grams, were evaluated in water with regard to their "cooked note" at a level of 2°/oo and compared with the reaction product to which no amino acids were added.

The samples were judged by a panel of six experienced tasters.

The evaluation results are summarized in the above table.

2. From the different groups of amino acids as well as from combinations of individual amino acids which were found interesting, different combinations were reacted under the reaction conditions described earlier. The reaction products were then evaluated in a reconstituted commercial orange juice again at a level of 2°/oo. The different amino acid combinations are given in Tabel II.

5

TABLE II

| Amino Acid \ Mixture | milligrams of L-amino acid | | | | | | | | | | |
|---|---|---|---|---|---|---|---|---|---|---|---|
| | 1 | 2 | 3 | 4 | 5 | 6 | 7 | 8 | 9 | 10 | 11 |
| Glycine | 83 | 83 | 83 | — | — | — | — | — | — | — | — |
| α-Alanine | 51 | 51 | 51 | 51 | 51 | 51 | 51 | 51 | 100 | 200 | 400 |
| Valine | 31 | 31 | 31 | 31 | — | 31 | 31 | 31 | 31 | 31 | 31 |
| Leucine | 22 | — | — | — | — | — | — | — | — | — | — |
| Isoleucine | 23 | — | — | — | — | — | — | — | — | — | — |
| Serine | 23 | 23 | 23 | 23 | — | 23 | 23 | 23 | 23 | 23 | 23 |
| Threonine | 12 | 12 | 12 | 12 | 12 | 25 | 50 | 100 | 12 | 12 | 12 |
| Lysine | 43 | — | — | — | — | — | — | — | — | — | — |
| Histidine | 12 | 12 | 12 | 12 | — | 12 | 12 | 12 | 12 | 12 | 12 |
| Arginine | 52 | 52 | 52 | 52 | — | 52 | 52 | 52 | 52 | 52 | 52 |
| Proline | 45 | 45 | — | — | — | — | — | — | — | — | — |
| Citrulline | 10 | 10 | — | — | — | — | — | — | — | — | — |
| Cysteine | 1 | 1 | 1 | — | — | — | — | — | — | — | — |
| Methionine | 1 | 1 | 1 | — | — | — | — | — | — | — | — |

From the analysis of these experiments, it appears that there is much less difference in the "cooked note" between any of the combinations 1 to 4 than between 1—4 and 5. It is apparent therefore that by using the most important amino acids alone, e.g. alanine and threonine, there are obtained products whose cooked note is less marked than by using multi-component amino acid mixtures.

The increase of the amount of threonine in mixture 4 had a more marked effect on flavor than the increase of the amount of alanine. A typical effective mixture is given under number 8.

3. Flavour composition for lemon juice

50 Grams of glucose monohydrate and 10 g of water were heated under stirring at 90°C until homogeneity, whereupon the following mixture of ingredients was added thereto:

| Ingredient | Quantity (g) |
| --- | --- |
| Ascorbic acid | 1.000 |
| Leucine | 0.230 |
| Valine | 0.310 |
| α-Alanine | 0.510 |
| Glycine | 0.830 |
| Serine | 0.230 |
| Threonine | 0.120 |
| Aspartic acid | 1.140 |
| Glutamic acid | 1.000 |
| Proline | 0.450 |
| Cysteine | 0.006 |
| Methionine | 0.001 |
| TETRAROME® lemon ([1]) | 10.000 |

([1]) origin: Firmenich SA, deterpenated natural lemon essential oil in powder form.

The mixture was kept at 90°C for 3 hours, then it was poured into 650 g of a 50% aqueous solution of maltodextrine and spray-dried.

When added to a commercial lemon juice at a concentration of 0.3% it conferred thereto a pleasant juicy-peely character.

4. Flavor composition for mandarin juice

The process was repeated by using the same ingredients TETRAROME® lemon was replaced however by TETRAROME® mandarin (origin: Firmenich SA, deterpenated manadarin essential oil). The spray-dried powder was evaluated in a reconstituted mandarin drink at 0.2% and preferred over a drink obtained by using TETRAROME® mandarin alone for its fleshy and juicy character.

5. Flavor composition for orange juice

70.22 Grams of glucose monohydrate and 14.093 g of water were heated under stirring at 90°C until homogeneity. The following mixture of ingredients was then added thereto:

| Ingredient | Quantity (g) |
| --- | --- |
| Ascorbic acid | 1.400 |
| Threonine | 0.120 |
| Serine | 0.030 |
| Aspartic acid | 0.060 |
| Monosodium glutamate $\cdot H_2O$ | 0.040 |
| Proline | 0.030 |
| Cysteine $\cdot HCl \cdot H_2O$ | 0.006 |
| Methionine | 0.001 |
| TETRAROME ® orange | 14.000 |
| Synth. orange essential oil[1] | 25.000 |

[1] origin: Firmenich SA, collection number 502.366/A

The mixture was kept under stirring at 90°C for three hours, then the reaction product was poured into 500 g of a 27% gum arabic solution, homogenized and spray-dried. When added to a commercial orange juice at a concentration of 0.2%, it conferred thereto a well marked juicy-peely character.

6. Aromatization of an instant orange drink powder

An instant orange drink powder base was prepared by mixing the following ingredients:

| Ingredient | Quantity (g) |
| --- | --- |
| Ascorbic acid | 0.50 |
| Dextrin | 0.62 |
| Tricalcium phosphate | 0.65 |
| Trisodium citrate | 0.65 |
| Pectin | 0.80 |
| Clouding agent* | 1.20 |
| Citric acid | 7.00 |
| Color** | 0.46 |
| Sugar, fine granulated | 121.12 |
| Total | 133.00 |

\* Beatreme 2217 (Beatrice Foods Co.)
\*\* Ariavit color sunset yellow at 10% (0.26 g) and Ariavit color tartrazine at 10% (0.20 g)

To this mixture, there were added 1.2 g of the flavor mixture obtained in example 5.

The resulting composition was diluted in 1 liter of cold water and the juice obtained was then evaluated by a panel of flavor experts. Its taste was found to be more cooked in character with a peely undertone by comparison with a juice obtained by adding TETRAROME® orange and synth. orange essential oil [see example 5, ([1])] to the described instant orange drink powder base.

7. Aromatization of a gelatin dessert powder

A gelatin dessert powder base was prepared by mixing the following ingredients:

| Ingredient | Quantity (g) |
| --- | --- |
| Disodium phosphate | 1.0 |
| Fumaric acid | 1.0 |
| Adipic acid | 1.7 |
| Gelatin | 7.7 |
| Sugar, fine granulated | 73.6 |
| Total | 85.0 |

To this power base, there were added 0.420 g of the flavor composition obtained in accordance with the preceding example 5 and 1 cup (240 ml) of boiling water was added to the resulting mixture while stirring. After complete solution of the ingredients, 1 cup (240 ml) of cold water was added and the obtained clear solution was chilled until setting.

The flavored gelatin thus obtained was tested by comparison with a control gelatin aromatized by TETRAROME® orange and synth. orange essential oil [see example 5, ([1])]. Its taste was found to be more cooked and peely than that of the control dessert.

8. Aromatization of an instant mousse dessert powder

A mousse dessert powder base was prepared by mixing the following ingredients:

| Ingredient | Quantity (g) |
| --- | --- |
| Disodium phosphate | 0.142 |
| Tetrasodium phosphate | 0.428 |
| Whipping agent, with emulsifier* | 28.100 |
| Whipping agent, with emulsifier** | 25.000 |
| Citric acid | 0.585 |
| Starch*** | 4.275 |
| Icing Sugar | 41.470 |
| Total | 100.000 |

   * VEE KREME-W/1
  ** Wiptreme 3120 (Beatrice Foods)
*** Snowflake VN-56 (Maizena)

The flavor composition obtained in accordance with preceding example 5 was added to two fractions of 100 g each of instant mousse powder at a concentration of 0.4 and 0.8%, respectively. The resulting mixtures were each mixed with 300 ml of cold milk and the suspensions were whipped for 3 minutes, then poured into dessert cups and refrigerated for 1 hour before serving.

The taste evaluation carried out by a flavorists panel showed that the desserts thus flavored possessed a cooked, juicy-peely and fleshy gustative character.

**Claims**

1. A process to improve or modify the taste and aroma of citrus fruit flavor compositions of both

9

0 175 871

natural and synthetic origin by conferring thereto a cooked gustative, optionally fleshy, juicy and peely character, which comprises adding to said compositions a product resulting from the process which consists in reacting at a temperature of between about 50 and 120°C an amino acid, or a mixture of amino acids selected from the group consisting of the following ones in their L-diastereoisomeric form:

glycine
α-alanine
valine
serine
threonine
histidine
arginine
aspartic acid
glutamic acid
pyroglutamic acid
cysteine
methionine
proline and
citrulline

with a mixture consisting of

a. a carbohydrate selected from the group consisting of pentoses and hexoses,
b. ascorbic acid,
c. thiamine hydrochloride,
d. a concentrated citrus fruit juice or a citrus fruit oil, or alternatively a mixture of aldehydes derived from citrus fruits, and optionally water, during a time sufficient to develop a composition which upon dilution in water possessed the desired flavor note.

2. The process of claim 1 wherein the mixture of amino acids results from any of the combinations A to F given hereinbelow:

A. glycine
   α-alanine
   valine
B. serine
   threonine
C. cysteine
   methionine
D. proline
   citrulline,
E. histidine
   arginine, and
F. glycine
   cysteine
   methionine.

3. The process of claim 1 wherein the hexoses and pentoses are chosen among the following ones: glucose, mannose, galactose, fructose, ribose, arabinose and xylose.

4. The process of claim 1 wherein the mixture of aldehydes comprises two or more of the following compounds:

| | |
|---|---|
| 2-heptyldec-2-enal | acetaldehyde |
| 2-octyldec-2-enal | butanal |
| undecanal | 2-ethylbutanal |
| 2-hexylundec-2-enal | pentanal |
| 2-octylundec-2-enal | trans-2-pentenal |
| dodecanal | hexanal |
| 2-dodecenal | trans-2-hexenal |
| 2-hexyldodec-2-enal | cis-2-hexenal |
| 2-heptyldodec-2-enal | hexenal |
| tetradecanal | heptanal |
| citronellal | octanal |
| geranial | 2-octenal |
| neral | octenal |
| citral | nonanal |
| α-senensal | decanal |
| β-sinensal | 2-decenal |
| benzaldehyde | trans-2-trans-4-decadienal |
| perillaldehyde | 2-hexyldec-2-enal |
| formaldehyde. | |

5. A flavor composition resulting from the process of any of claims 1 to 4.

10

# 0 175 871

6. An edible material comprising as one of its flavor effective ingredients a composition resulting from the process of any of claims 1 to 4.

7. As edible material according to claim 6, a citrus fruit juice of natural or synthetic origin.

**Patentansprüche**

1. Verfahren zur Verbesserung oder zur Veränderung des Geschmacks und Aromas von natürlichen und synthetischen Zitrusfruchtaromakompositionen, in welchen man ihnen eine zum "gekochten" Typ, gegebenenfalls zum Fruchtfleisch-, Saft- oder Schalentyp gehörende Note verleiht, dadurch gekennzeichnet, dass man den obengenannten Kompositionen ein Produkt zufügt, das durch ein Verfahren, welches daraus besteht, dass man bei einer Temperatur, die zwischen 50 und 120°C liegt, eine Aminosäure oder eine Mischung von Aminosäuren in ihrer L-Diastereomerenform, die unter folgenden Verbindungen ausgewählt wurde:

Glycin
alpha-Alanin
Valin
Serin
Threonin
Histidin
Arginin
Aspariginsäure
Glutaminsäure
Pyroglutaminsäure
Cystein
Methionin
Prolin und
Citrullin

mit einer Mischung, welche aus folgenden Bestandteilen besteht

a. einem Carbohydrat der Gruppe der Pentosen und Hexosen,
b. Ascorbinsäure
c. Thiamin Hydrochlorid,
d. konzentriertem Zitrusfruchtsaft oder Zitrusöl oder einem

Aldehydgemisch von Zitrusfruchtherkunft, und gegebenenfalls Wasser, während einer genügend langen Zeit umsetzt, um nach Verdünnen mit Wasser eine Komposition zu erhalten, welche die gewünschte Note zeigt.

2. Verfahren nach Anspruch 1, dadurch gekennzeichnet, dass die Aminosäurenmischung unter einer der von A bis F beschriebenen Kompositionen ausgewählt wird:

A. Glycin
   alpha-Alanin
   Valin
B. Serin
   Threonin
C. Cystein
   Methionin
D. Prolin
   Citrullin
E. Histidin
   Arginin und
F. Glycin
   Cystein
   Methionin.

3. Verfahren nach Anspruch 1, dadurch gekennzeichnet, dass die Hexosen und Pentosen unter folgenden Verbindungen gewählt werden: Glucose, Mannose, Galactose, Fructose, Ribose, Arabinose und Xyloe.

4. Verfahren nach Anspruch 1, dadurch gekennzeichnet, dass das Aldehydgemisch zumindest zwei der folgenden Verbindungen enthält.

| | |
|---|---|
| 2-Heptyldec-2-enal | Acetaldehyd |
| 2-Octyldec-2-enal | Butanal |
| Undecanal | 2-Aethylbutanal |
| 2-Hexylundec-2-enal | Pentanal |
| 2-Octylundec-2-enal | trans-2-Pentenal |
| Dodecanal | Hexanal |
| 2-Dodecenal | trans-2-Hexenal |
| 2-Hexyldodec-2-enal | cis-2-Hexenal |

11

| | |
|---|---|
| 2-Heptyldodec-2-enal | Hexenal |
| Tetradecanal | Heptanal |
| Citronellal | Octanal |
| Geranial | 2-Octenal |
| Neral | Octenal |
| Citral | Nonanal |
| α-Sinensal | Decanal |
| β-Sinensal | 2-Decenal |
| Benzaldehyd | trans-2-trans-4-Decadienal |
| Perillaaldehyd | 2-Hexyldec-2-enal und |
| Formaldehyd. | |

5. Eine Aromakomposition, welche aus dem Verfahren nach einem der Ansprüche 1 bis 4 erhalten wird.

6. Ein essbares Produkt, welches als aktiven Aromabestandteil eine Komposition enthält, welche aus dem Verfahren nach einem der Ansprüche 1 bis 4 erhalten wird.

7. Als essbares Produkt gemäss Anspruch 6, einen Zitrusfruchtsaft natürlichen oder synthetischen Ursprungs.

**Revendications**

1. Procédé pour améliorer ou modifier le goût et l'arôme de compositions à l'arôme d'agrumes d'origine naturelle ou synthétique en leur conférant un caractère gustatif de type cuit, le cas échéant de type pulpe, jus et pelure, caractérisé en ce qu'on additionne auxdites compositions un produit résultant du procédé qui consiste à soumettre à réaction, à une température comprise entre environ 50 et 120°C, un acide aminé ou un mélange d'acides aminés dans leur forme L-diastéréoisomérique sélectionnés parmi le groupe que voici:

glycine
alpha-alanine
valine
sérine
thréonine
histidine
arginine
acide aspartique
acide glutamique
acide pyroglutamique
cistéine
méthionine
proline et
citrulline

avec un mélange constitué par

a. un hydrate de carbone sélectionné parmi les pentoses et les hexoses,
b. l'acide ascorbique,
c. le chlorhydrate de thiamine,
d. un jus d'agrume conentré ou une essence d'agrume, ou un mélange

d'aldéhydes provenant d'agrumes, et le cas échéant de l'eau, pendant un temps suffisant à développer une composition qui, après dilution dans l'eau, possède la note aromatisante désirée.

2. Procédé selon la revendication 1, caractérisé en ce que le mélange d'acides aminés est choisis parmi les combinaisons A à F suivantes:

A. glycine
alpha-alanine
valine
B. sérine
thréonine
C. cystéine
méthionine
D. proline
citrulline
E. histidine
arginine, et
F. glycine
cystéine
méthionine

3. Procédé selon la revendication 1, caractérisé en ce que les hexoses et les pentoses sont choisis parmi les suivants: glucose, mannose, galactose, fructose, ribose, arabinose et xylose.

**0 175 871**

4. Procédé selon la revendication 1, caractérisé en ce que le mélange d'aldéhydes contient au moins deux des composés suivants:

| | |
|---|---|
| 2-heptyldéc-2-énal | acétaldéhyde |
| 2-octyldéc-2-énal | butanal |
| undécanal | 2-éthylbutanal |
| 2-hexylundéc-2-énal | pentanal |
| 2-octylundéc-2-énal | trans-2-penténal |
| dodécanal | hexanal |
| 2-dodécénal | trans-2-hexénal |
| 2-hexyldodéc-2-énal | cis-2-hexénal |
| 2-heptyldodéc-2-énal | hexénal |
| tétradécanal | heptanol |
| citronellal | octanal |
| géranial | 2-octénal |
| néral | octénal |
| citral | nonanal |
| alpha-sinensal | décanal |
| bêta-sinensal | 2-décénal |
| benzaldéhyde | trans-2-trans-4-décadiénal |
| aldéhyde périllique | 2-hexyldéc-2-énal et |
| aldéhyde formique | |

5. Composition aromatisante résultant du procédé de l'une des revendications 1 à 4.

6. Produit comestible contenant à titre d'un de ses ingrédients aromatisants actifs une composition résultant du procédé de l'une des revendications 1 à 4.

7. A titre de produit comestible selon la revendication 6, un jus d'agrume d'origine naturelle ou synthétique.

13